# DEMANDE DE BREVET EUROPEEN

(11) **EP 1 408 670 A1**
(43) Date de publication de la demande: **14.04.2004**
(21) Numéro de dépôt: 03102737.8
(22) Date de dépôt: 12.09.2003
(51) Int. Cl.: H04L 29/06, H04L 12/28

(54) **Procédé de production d'un premier identifiant isolant un utilisateur se connectant à un réseau télématique**

(30) Priorité: 24.09.2002 FR 0211808
(71) Demandeur: Société Française du Radiotéléphone-SFR, 75008 Paris (FR)
(72) Inventeur: Wary, Jean-Philippe, 92340, BOURG LA REINE (FR)
(74) Mandataire: Schmit, Christian Norbert Marie

(57) **Abrégé**

Pour protéger la vie privée d'un utilisateur abonné à un opérateur de téléphonie mobile, l'opérateur produit un identifiant (200) isolant permettant à l'utilisateur de se connecter anonymement à un fournisseur de contenu. L'opérateur/producteur est le seul capable de lier l'identifiant isolant à l'utilisateur sur requête. Un identifiant isolant est de plus soit de session, et donc changeant à chaque connexion d'un utilisateur à un fournisseur, soit de contexte, et donc rémanent entre plusieurs connexions. Un identifiant de contexte est de plus propre à un couple utilisateur/fournisseur, ce qui isole encore plus l'utilisateur.

## Description

L'invention a pour objet un procédé de production d'un premier identifiant isolant un utilisateur se connectant à un réseau télématique. Le domaine de l'invention est celui de l'accès, par un utilisateur, à un fournisseur de contenu via un fournisseur d'accès. En particulier le domaine de l'invention est celui des passerelles existant entre les réseaux de téléphonie cellulaire, et les réseaux de type Internet, voix, SMS, MMS, ou autres supports de transmission d'un contenu multimédia ou mono média.

Un but de l'invention est de préserver la vie privée de l'utilisateur.

Un autre but de l'invention est la préservation des basses de données clients des acteurs d'un réseau, et de limitation des activités d'analyse comportementale.

Un autre but de l'invention est de contribuer à la préservation du secret des correspondances.

Un autre but de l'invention est de permettre à une entité juridique autorisée d'identifier civilement un utilisateur.

Un autre but de l'invention est de permettre au fournisseur de contenu de gérer un ou plusieurs contextes pour les utilisateurs se connectant audit fournisseur de contenu.

Dans l'état de la technique il existe plusieurs moyens pour un fournisseur de contenu d'identifier un utilisateur qui accède à l'un de ses services. Ces moyens dépendent du média utilisé par l'utilisateur pour accéder au service. On distingue principalement quatre modes d'accès, mais la liste n'est pas exhaustive. Un premier mode d'accès est un accès de type Internet. Le mode Internet se subdivise lui-même en deux sous-modes que l'on peut qualifier de mode connecté et mode non connecté. Le mode Internet connecté est un mode de connexion utilisant un protocole de type HTTP (Hyper Text Transfer Protocol, ou protocole de transmission hypertexte) ou WTP (Wireless Transfer Protocol, ou protocole de transmission sans fil.). Un serveur, par exemple HTTP, est un appareil communicant via un réseau, par exemple Internet, et selon le protocole HTTP. Un tel serveur héberge des sites WEB (ou Internet) ou WAP (ou Internet adapté au téléphone mobile). Il existe aussi un mode d'accès Internet non connecté via un protocole de type SMTP (Simple Mail Transfer Protocol, ou protocole simple de transfert de mail), dans lequel la connexion consiste en fait en un échange de message électronique de type mail.

Un autre mode d'accès est un mode d'accès par opérateur qui se subdivise lui aussi en deux sous-modes. Un premier sous-mode d'accès, et troisième mode d'accès, est alors un mode d'accès que 'on peut qualifier de non connecté via un protocole de type SMS (Short Message Service, ou service de message court), ou MMS (Multimedia Message Service, ou service de message multimédia). Un quatrième mode d'accès est un mode par opérateur connecté que l'on appelle aussi mode vocal dans lequel l'utilisateur accède se connecte à un serveur vocal.

Pour les quatre modes d'accès, il existe une solution type simple qui consiste à réaliser une interface proposant la saisie d'un identifiant et d'un mot de passe lors d'une connexion à un serveur. Dans la mesure où l'utilisateur se connectant au serveur du fournisseur de contenu le fait via un téléphone mobile, les moyens mis à la disposition de l'utilisateur, pour saisir l'identifiant (ou login) et le mot de passe, sont limités par l'interface utilisateur du téléphone. Soit l'identifiant et le mot de passe sont intégralement numériques, ils sont alors malaisés à retenir et faciles à deviner. Soit l'identifiant et le mot de passe sont alphanumériques, et dans ce cas il est fastidieux de les saisir avec un clavier ne comportant que 9 touches. De plus cette étape de saisie constitue une étape supplémentaire pour l'utilisateur ce qui dissuade, dans la plupart des cas, un utilisateur de téléphone mobile de se connecter au site proposant une interface de connexion du type identifiant et mot de passe.

Une autre solution, dans le cas des serveurs du premier type, consiste à se servir d'un cookie, ou témoin. Un cookie est un petit fichier enregistré sur l'appareil de l'utilisateur. Lors d'une connexion à un fournisseur de contenu, le fournisseur de contenu peut alors accéder à ce cookie pour identifier l'utilisateur. Un problème de cette solution réside dans le fait qu'il est possible de voler un cookie par des moyens électroniques ou autre. L'utilisation d'un cookie n'est donc pas compatible avec des impératifs forts de sécurité. Un autre problème réside alors dans le fait que les cookies ont une relativement mauvaise presse, ce qui incite les utilisateurs à les effacer. De plus l'utilisateur peut configurer l'application, ou navigateur, qu'il utilise pour se connecter au fournisseur de contenu, afin que cette application n'accepte pas les cookies. Dans ce cas l'utilisateur se voit dans l'impossibilité de se connecter au serveur du fournisseur de contenu.

Pour les troisième et quatrième modes d'accès, la plupart du temps le fournisseur de contenu a accès au numéro de téléphone de la personne qui appelle le serveur. Le fournisseur de contenu est donc capable d'identifier la personne via ce numéro de téléphone. Cela ne va pas sans poser un problème de protection de la vie privée. En effet, il est tout à fait légitime qu'un utilisateur ne souhaite pas être identifié physiquement lorsqu'il se connecte à un serveur d'un fournisseur de contenu. On doit en effet pouvoir acquérir un bien de façon anonyme. Il est alors possible d'essayer de se connecter en masquant son numéro, mais dans ce cas il est impossible de facturer le service et donc de se connecter effectivement. A l'heure actuelle, la seule solution consiste donc à ne pas se connecter à ce fournisseur de contenu.

Dans la description, et dans la pratique, accéder à un fournisseur de contenu est équivalent à se connecter à un serveur d'un fournisseur de contenu.

L'invention résout ces problèmes en permettant de produire un identifiant que l'utilisateur présente au fournisseur de contenu, cet identifiant ne permettant pas à un autre, que la personne ayant produit cet identifiant, d'identifier civilement l'utilisateur. Un tel identifiant permet bien de protéger la vie privée de l'utilisateur. Un tel identifiant permet bien d'identifier l'utilisateur via une requête produite par l'autorité légale souhaitant identifier l'utilisateur et comportant l'identifiant ainsi que la date à laquelle a été produit cet identifiant.

Un identifiant isolant selon l'invention requiert pour sa production au moins deux champs. Un premier champ est un identifiant de l'utilisateur, un deuxième champ est un champ permettant d'assurer la variabilité de l'identifiant isolant. Cette variabilité est assurée soit par une donnée pseudo-aléatoire, soit par une volonté exprimée de l'utilisateur. Les premier et deuxième champs sont alors combinés puis transcodés de manière à ce que le premier champ ne soit accessible à personne. Seul le fournisseur d'accès, c'est-à-dire l'entité produisant l'identifiant isolant, est capable d'inverser le chiffrement et donc d'identifier civilement l'utilisateur. Les buts poursuivis par l'invention sont donc bien atteints.

L'invention a donc pour objet un Procédé de production d'un premier identifiant de contexte isolant un utilisateur se connectant à un fournisseur de contenu via un réseau télématique et des moyens mis à sa disposition par un fournisseur d'accès, l'utilisateur étant identifié par un deuxième identifiant par le fournisseur d'accès, procédé caractérisé en ce que :
- les moyens du fournisseur d'accès comporte une passerelle pour associer le premier identifiant isolant de contexte au deuxième identifiant,
- le premier identifiant isolant de contexte requérant pour sa production au moins un premier champ pour assurer l'association entre le premier identifiant isolant de contexte et l'utilisateur,
- le premier identifiant isolant de contexte requiert pour sa production un deuxième champ pour assurer la variabilité du premier identifiant en fonction du fournisseur de contenu,
- les premier et deuxième champs sont transcodés.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles à la mise en oeuvre du procédé selon l'invention.
- Figure 2 : une illustration d'une structure possible pour un identifiant isolant selon l'invention.
- Figure 3 : une illustration d'étapes de mise en oeuvre du procédé selon l'invention.

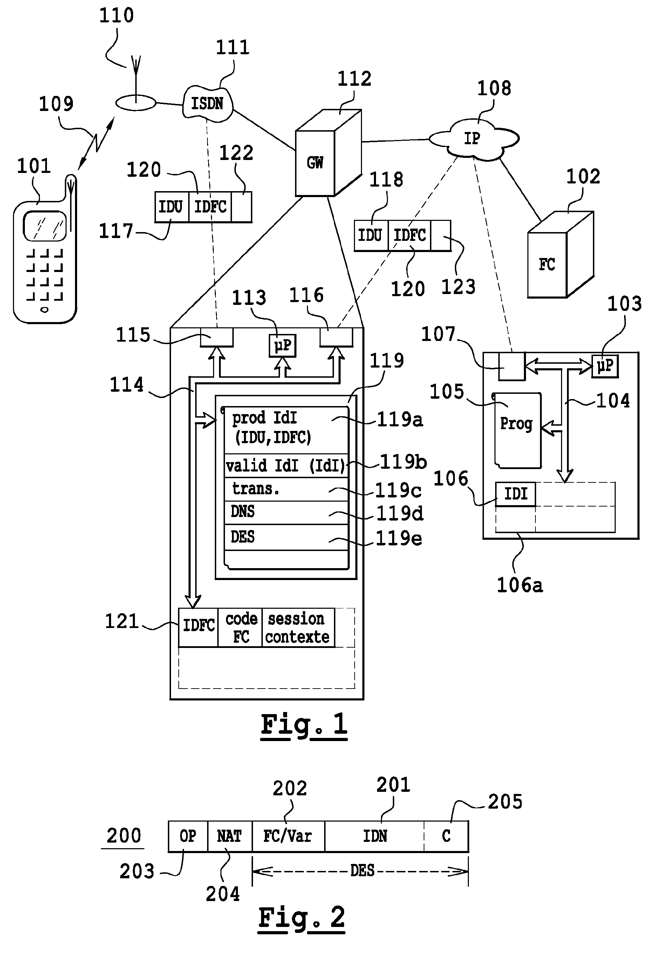

La figure 1 montre un appareil 101 qu'utilise l'utilisateur pour se connecter à un serveur 102 d'un fournisseur de contenu. Dans la pratique l'appareil 101 est un téléphone mobile qui est capable d'établir une communication selon de multiples protocoles. Parmi ces protocoles on peut citer des protocoles compatibles avec Internet, avec la voix, et avec le protocole SMS. En d'autres termes, l'appareil 101, qui est un téléphone mobile 101, est capable d'établir une communication selon un mode WAP, selon un mode vocal, et/ou, selon un mode SMS.

Le serveur 102 est capable de communiquer selon au moins l'un des protocoles précédemment cités pour le téléphone 101. Le serveur 102 comporte un microprocesseur 103 connecté à un bus 104 interne au serveur 102. Le bus 104 permet de connecter le microprocesseur à une mémoire 105 de programme, à une mémoire 106 d'utilisateur, et à des circuits 107 interface avec, par exemple, le réseau 108 Internet.

La mémoire 105 comporte des codes instruction qui commandent le microprocesseur lorsque celui-ci effectue différentes actions. En particulier, la mémoire 105 comporte des codes instruction pour la mise en oeuvre d'au moins un des protocoles précédemment cités.

La mémoire 106 est, par exemple, une base de données. A cet effet la mémoire 106 est décrite comme une table comportant au moins autant de lignes que d'utilisateurs susceptibles de se connecter, ou s'étant déjà connectés, au serveur 102. Chaque ligne comporte un certain nombre de champs. Une colonne 106a correspond à un champ identifiant utilisateur. Il s'agit là d'un identifiant selon l'invention. Lorsque le serveur 102 reçoit une requête, cette requête comporte cet identifiant. Cela permet au serveur 102 d'identifier l'utilisateur, et de déterminer, par exemple, des préférences de l'utilisateur. Un ensemble de préférences s'appelle aussi un contexte. Un contexte comporte diverses informations permettant à l'utilisateur de personnaliser l'apparence, et/ou le contenu, des informations qui lui sont présentées par le serveur auquel l'utilisateur se connecte.

Dans l'exemple la mémoire 106 est comprise dans le serveur 102. Dans la pratique cette mémoire/base de données 106 peut être hébergée par un autre serveur auquel le serveur 102 peut se connecter pour accéder au contenu de ladite base de données.

Lorsqu'un utilisateur utilise l'appareil 101 pour se connecter au serveur 102, le téléphone 101 établit une liaison 109 hertzienne avec une station 110 de base. La station 110 de base est elle-même connectée, via un réseau 111, par exemple ISDN, à une passerelle 112 d'un fournisseur d'accès auquel est, par exemple, abonné l'utilisateur du téléphone 101. Le réseau 111 ISDN est en fait tout ou partie d'un réseau téléphonique commuté. Dans la pratique le réseau 111 peut être n'importe quelle solution technique permettant de connecter une station de base à la passerelle 112 du fournisseur d'accès. Un fournisseur d'accès est, par exemple, un opérateur de téléphonie mobile.

Le fournisseur de contenu est, par exemple, une passerelle d'accès au réseau Internet, aussi connu sous le nom de portail Internet, un serveur vocal de météo, un serveur SMS standard.

La passerelle 112 comporte un microprocesseur 113, connecté à un bus 114. A ce bus 114 sont aussi connectés des circuits 115 interface avec le réseau 111, et des circuits 116 interface avec le réseau 108. La passerelle 112 est donc une passerelle entre les réseaux 111 et 108.

Sur le réseau 111, l'appareil 101, et donc son utilisateur, est identifié par un identifiant 117 utilisateur. Sur le réseau 108, l'utilisateur de l'appareil 101 est identifié par un identifiant 118 isolant. Un rôle de la passerelle 112 est d'effectuer le lien entre l'identifiant 117 et l'identifiant 118 isolant. Un autre rôle, classique, de la passerelle 112 est d'assurer la conversion de protocole entre les protocoles utilisés sur le réseau 111, et les protocoles utilisés sur le réseau 108. L'identifiant 117 est, par exemple, le numéro de téléphone de l'utilisateur de l'appareil 101. Un tel identifiant 117 est un identifiant public qui permet à tous d'associer à cet identifiant 117 une personne physique. Un tel identifiant public est, par exemple, un numéro de téléphone, une adresse e-mail, une adresse Internet publique... Un but de l'invention est d'empêcher le fournisseur de contenu d'identifier physiquement, c'est-à-dire civilement, les personnes qui se connectent au serveur 102.

La passerelle 112 comporte une mémoire 119 de programme. La mémoire 119 comporte différentes zones comportant des codes instruction correspondant chacune à une tâche effectuée par le microprocesseur 113.

Parmi les zones de la mémoire 119, on peut distinguer une zone 119a comportant des codes instruction correspondant à la production, par la passerelle 112, c'est-à-dire en fait par le microprocesseur 113, de l'identifiant 118 isolant à partir d'au moins l'identifiant 117, et dans une mise en oeuvre préférée, d'un code 120 du fournisseur de contenu.

Une zone 119b comporte des codes instruction permettant à la passerelle 112 de valider un identifiant 118 lorsque la passerelle 112 reçoit une requête de la part du serveur 102. Une zone 119c comporte les codes instruction permettant à la passerelle 112 d'identifier un utilisateur à partir d'un identifiant 118 isolant. Cela est utilisé pour transmettre une réponse du serveur 102 à l'appareil 101 par exemple. Une zone mémoire 119d comporte des codes instruction permettant de déterminer un modificateur d'identifiant à partir d'un identifiant 120 d'un fournisseur de contenu. Une zone 119e comporte des codes instruction permettant d'effectuer un chiffrement. De préférence il s'agit d'un chiffrement symétrique.

La passerelle 112 comporte une mémoire 121 permettant d'associer un identifiant d'un fournisseur de contenu à un code pour ce fournisseur de contenu, et à une nature d'un identifiant isolant à produire.

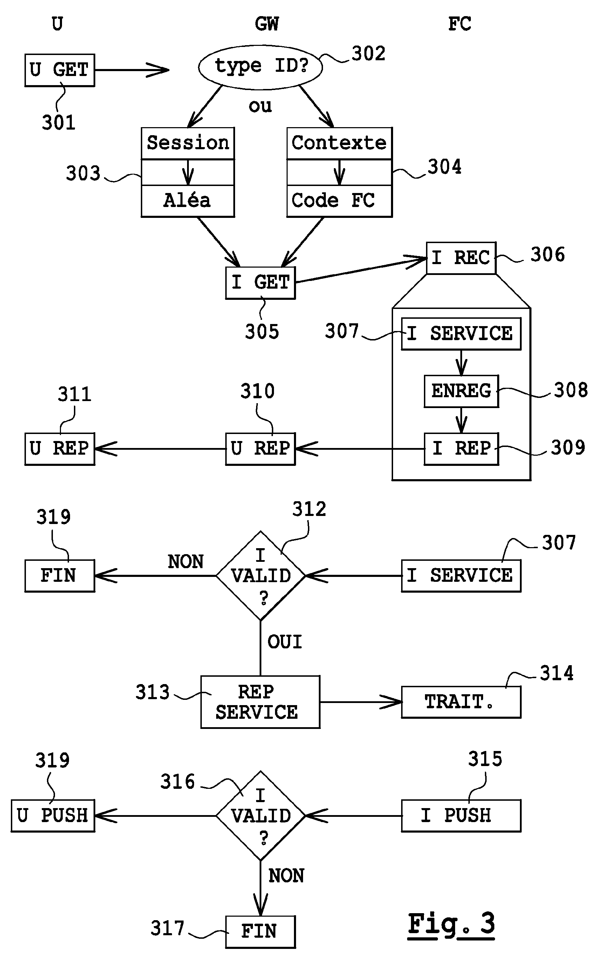

La figure 2 illustre une structure possible pour un identifiant isolant selon l'invention. La figure 2 montre un identifiant 200 isolant requérant quatre champs. Pour la suite de la description on utilise le verbe comporter pour associer des champs à un identifiant. Cependant il ne s'agit pas forcément d'une simple juxtaposition de valeurs. Ces valeurs peuvent aussi être combinées entre elle selon un procédé réversible par le fournisseur d'accès.

Un premier champ 201 correspond à l'identifiant 117 identifiant l'utilisateur de l'appareil 101 sur le réseau 111. Le champ 201 permet au fournisseur d'accès d'identifier civilement un utilisateur. Dans le cas, par exemple, d'un opérateur de téléphonie mobile, le champ 201 comporte les chiffres utiles d'un numéro de téléphonie mobile, mais aussi éventuellement un identifiant 205 de contrat permettant de rattacher le numéro de téléphone à l'utilisateur. La non-utilisation d'un numéro de contrat est possible mais risque de provoquer des confusions si le numéro de téléphone est attribué à un autre utilisateur. Ce numéro de contrat est utile en cas de nouvelle attribution du numéro de téléphone à un autre utilisateur. Un tel numéro de contrat est, par exemple, un compteur du nombre d'attribution du numéro de téléphonie. Un deuxième champ 202 correspond à un moyen de faire varier l'identifiant 200 isolant en fonction, soit d'un desiderata de l'utilisateur, soit d'un code de fournisseur de contenu. Les champs 202 et 201 sont combinés et/ou transcodés grâce aux codes instruction de la zone 119e. Le transcodage est de préférence un chiffrement symétrique. Un transcodage peut aussi être réalisé par substitution à partir d'une table, ou à partir d'une séquence de nombres, d'une fonction de hachage. Pour la suite nous employons l'exemple du chiffrement, mais il peut s'agir de n'importe quel type de transcodage réversible. Un identifiant isolant est alors le résultat de cette combinaison - transcodage, c'est-à-dire une séquence de bits inintelligible pour un autre que le fournisseur d'accès. Par inintelligible on comprend impossible à rattacher à une identité civile.

Dans une variante, l'identifiant 200 isolant comporte un champ 203 permettant d'identifier le fournisseur d'accès ayant produit l'identifiant, et un champ 204 permettant, par exemple de coder une version, et/ou nature, pour l'identifiant 200 isolant. L'identifiant 200 isolant est utilisé comme identifiant 118 isolant lors des communications entre la passerelle 112 et le serveur 102. C'est l'identifiant 118 isolant qui est enregistré dans la colonne 106a de la mémoire 106 d'utilisateur du serveur 102. Dans cette variante un identifiant isolant est alors la juxtaposition des champs 203, 204 et du résultat de la combinaison - transcodage du paragraphe précédent. Il y a donc une partie inintelligible, car transcodée, par le fournisseur de contenu et une partie intelligible car non transcodée.

La figure 3 montre des étapes d'un scénario dans lequel le procédé selon l'invention est mis en oeuvre.

La figure 3 montre une étape 301 dans laquelle le téléphone 101 émet une requête à destination du fournisseur 102 de contenu. Cette requête comporte un identifiant 117 d'utilisateur, un identifiant 120 de fournisseur de contenu, et un champ 122 comportant la requête elle-même. Une telle requête est, par exemple, une requête GET ou "prendre", au format tel que défini par le protocole HTTP. A noter que puisque l'appareil 101 est un téléphone mobile, il s'agit alors du protocole WTP. La requête produite et émise à l'étape 301 est reçue dans une étape 302 par la passerelle 112. Dans l'étape 302 le microprocesseur 113 extrait de la requête l'identifiant 120 de fournisseur de contenu. Il parcourt alors la table 121 à la recherche de cet identifiant de fournisseur de contenu. Une fois qu'il a trouvé l'identifiant de fournisseur de contenu, le microprocesseur 113 est capable de déterminer un code pour ce fournisseur de contenu ainsi qu'une nature d'identifiant. Si l'identifiant du fournisseur de contenu n'apparaît pas dans la table 121, alors le microprocesseur 113 adopte un comportement par défaut. Dans l'exemple on admet que le comportement par défaut consiste à produire un identifiant isolant de session.

L'identifiant 120 est, dans un exemple préféré, une adresse au format IPV4 (Internet Protocol Version 4, pour protocole Internet version 4). Il peut aussi s'agir d'un numéro de téléphone d'un serveur vocal ou SMS. Il peut aussi s'agir d'une adresse Internet au format IPV6 (Internet Protocol Version 6, pour protocole Internet version 6) ou d'une URL pour Universal Resource Locator ou Localisation Universelle d'une Ressource, d'une adresse e-mail...

Si l'identifiant 120 de fournisseur de contenu correspond, dans la table 121, à une nature d'identifiant isolant de session on passe à une étape 303 de production d'un identifiant isolant de session. Sinon on passe à une étape 304 de production d'un identifiant isolant de contexte.

Qu'il s'agisse d'un identifiant isolant de session ou de contexte, ils ont tous les deux la même structure qui est celle décrite pour la figure 2. Ce qui différencie un identifiant de session d'un identifiant de contexte est le contenu du champ 202. Dans le cas de l'identifiant de session le champ 202 comporte une donnée pseudo-aléatoire. Une telle donnée pseudo-aléatoire est par exemple le nombre de secondes écoulées depuis le 1^{er} janvier 1970 à 0h00. Une telle donnée pseudo-aléatoire peut aussi être n'importe quel nombre généré par un générateur de nombres pseudo-aléatoires initialisé, par exemple, par l'heure à laquelle a été produit l'aléa. D'une manière générale la donnée pseudo-aléatoire est un nombre aléatoire.

Dans l'étape 304 le champ 202 correspond au code de fournisseur de contenu lu dans la mémoire 121 à l'étape 302.

Le champ 204 permet, par exemple, de coder la nature de l'identifiant. Le champ 204 a donc une valeur quand il s'agit d'un identifiant isolant de session, et une autre valeur lorsqu'il s'agit d'un identifiant isolant de contexte. Lorsque la valeur du champ 202 est déterminée, le microprocesseur 113 est en mesure de produire un identifiant isolant selon l'invention. Le microprocesseur 113 chiffre l'ensemble formé par le champ 202 et le champ 201. Puis le microprocesseur 113 associe le résultat du chiffrement à un identifiant 203 de l'opérateur gérant la passerelle 102, et à la nature 204 de l'identifiant isolant. On obtient ainsi l'identifiant 118 isolant. On remarque que la taille de l'identifiant isolant peut être différente de la taille de l'identifiant 117. On rappelle que les champs 203 et 204 sont optionnels.

Une fois l'identifiant 118 isolant produit, on passe à une étape 305 de production et d'émission d'une requête à destination du serveur 102. La requête produite à l'étape 305 comporte un identifiant isolant 118, un identifiant de fournisseur de contenu 120 et un champ 123 de requête. Dans la pratique les champs 120 et 123 sont identiques aux champs 120 et 122. Dans notre exemple, la requête produite à l'étape 305 est au format HTTP. Dans ce cas le champ 120 est alors une adresse IP de destination. Dans la pratique la requête produite à l'étape 305 par la passerelle 112 est à un format (voix, SMS, IP ...) compatible avec le serveur que cherche à joindre l'utilisateur du téléphone 101.

Le champ 118 identifiant isolant est un champ au format décrit par la figure 2. L'identifiant 118 isolant comporte donc un champ identifiant l'opérateur ayant produit l'identifiant isolant, un champ permettant de coder la nature de l'identifiant isolant selon qu'il est de session ou de contexte, et un champ chiffré. Le champ chiffré une fois déchiffré comporte deux champs. Ces deux champs correspondent aux champs 202 et 201. Le fournisseur de contenu est incapable de réaliser le déchiffrement et donc d'accéder aux champs 201 et 202.

Après avoir émis la requête on passe à une étape 306 de réception de la requête émise à l'étape 305 par le serveur 102. Dans l'étape 306 le serveur 102 a donc accès aux champs 118 et 123. Le champ 118 lui permet de consulter la table 106 à la recherche d'un certain nombre d'informations sur l'utilisateur se connectant au serveur 102. Dans la pratique s'il s'agit d'un identifiant isolant de session il y a peu de chances que la table 106 comporte des informations sur l'utilisateur. En effet un identifiant de session variant à chaque session, un même utilisateur ne se connectera pas deux fois au serveur 102 avec le même identifiant isolant de session. Pour cette description on entend par session une durée temporelle limitée à, par exemple, un quart d'heure. La durée de la session est aisément mesurable car un identifiant isolant de session selon l'invention comporte, par exemple, une information de date de création, ou d'expiration.

Un identifiant de contexte peut avoir une durée de vie beaucoup plus longue, par exemple de six mois à dix-huit mois, voire plus. La durée de vie d'un identifiant de contexte est gérée, par exemple, par le clé utilisé pour effectuer le chiffrement qui change à la fréquence de la durée de vie d'un identifiant de contexte. La durée de vie d'un identifiant de contexte peut aussi être gérée par le contenu du champ 202 qui change à la fréquence de la durée de vie d'un identifiant de contexte. Dans une variante utilisant le champ 204, un identifiant isolant de contexte est donc typé par le champ 204 et a une date de création. Un identifiant de contexte a alors une durée de vie exprimée, par exemple, en mois ou années.

Le choix de la durée de vie, et de son mode de gestion, revient à l'entité ayant la charge de la passerelle 112. Le fait que la durée de vie soit garantie permet à un fournisseur de contenu d'associer des informations, aussi appelé contexte, à cet identifiant isolant.

Parmi les actions possibles à l'étape 306 le serveur 102 peut produire et émettre une requête de service vers la passerelle 112 à partir de l'identifiant 118, c'est l'étape 307, il peut enregistrer des informations dans la table 106, c'est l'étape 308, et il peut produire et émettre une réponse à la requête de l'utilisateur du téléphone 101, c'est l'étape 309.

Lorsque le serveur 102 produit une réponse à la requête émise à l'étape 305 il constitue une trame de réponse comportant un champ 118 identifiant un utilisateur, un champ 120 comportant un identifiant du serveur effectuant la réponse, et un champ 123 qui comporte alors la réponse à la requête. Cette réponse est adressée à la passerelle 112. Dans une étape 310, la passerelle 112 reçoit la réponse à la requête émise à l'étape 301. La passerelle 112 effectue alors un transcodage entre les identifiants 118 et 117 pour transmettre la réponse du serveur 102 au téléphone 101. On passe alors à une étape 311 de réception par l'appareil 101 de la réponse à la requête qu'il a émise à l'étape 301.

Dans l'étape 310 le transcodage d'identifiant peut s'accompagner d'une vérification de la validité de l'identifiant. Cette vérification s'effectue, par exemple, après avoir déchiffré la partie chiffrée de l'identifiant 118 isolant et ainsi récupéré la valeur du champ 202. La validation dépend alors de la nature de l'identifiant. S'il s'agit d'un identifiant de session, le champ 202 correspond à une date. On compare alors cette date à la date à laquelle a été reçue la réponse. Si la différence entre ces deux dates est supérieure à un délai prédéfini, par exemple un quart d'heure, alors la requête est considérée comme non valable et ne sera pas retransmise vers l'appareil 101.

S'il s'agit d'un identifiant de contexte, on compare alors le contenu du champ 202 au contenu du champ code dans la table 121 pour la ligne correspondant à l'identifiant 120. S'il y a adéquation la requête est valable, sinon la requête est rejetée.

Dans l'étape 307 le serveur 102 émet une requête de service à destination du serveur 112. Cette requête comporte un identifiant isolant d'utilisateur, un identifiant de fournisseur de contenus, et un champ de requête. Une telle requête peut porter, par exemple, sur une demande d'identification d'un utilisateur, une demande de localisation d'un utilisateur, une demande d'envoi d'un message vers un abonné/utilisateur, ou une demande d'informations sur la nature de l'appareil utilisé par l'utilisateur pour se connecter au serveur 102. Cette liste n'est pas exhaustive. Le serveur 112 reçoit à l'étape 312 la requête de demande de service. Dans l'étape 312 la passerelle 112 commence par vérifier la validité de l'identifiant isolant. Cette vérification se fait comme précédemment décrit. Si l'identifiant n'est pas valide, on passe à une étape 319 de fin dans laquelle la passerelle 112 ne donne pas suite à la requête de service, sinon on passe à une étape 314 de réponse à la requête de service.

Dans une variante de l'invention la table 121 comporte en plus, pour chaque fournisseur de contenu, une liste des services auxquels peut prétendre le fournisseur de contenu. Dans l'étape 313 la passerelle 112 vérifie alors que le fournisseur de contenu émettant la requête a bien le droit d'émettre cette requête, c'est-à-dire de prétendre à ce service. Si c'est le cas, la passerelle 112 produit une réponse à cette requête service et transmet la réponse au serveur 102. Sinon il n'y a pas de réponse à la requête de service.

Dans une étape 314 le serveur 102 reçoit la réponse à la requête de service. Cette réponse permet au serveur 102 de mettre à jour la table 106 ou de produire la réponse de l'étape 309. En effet on peut envisager que la requête émise à l'étape 301 ait été une requête pour connaître la liste des restaurants proches de l'endroit où se trouve l'utilisateur. Dans ce cas le serveur 102 a besoin de connaître la localisation de l'utilisateur, le serveur 102 émet donc une requête de localisation vers la passerelle 112. La réponse de cette localisation permet au serveur 102 d'envoyer la réponse appropriée à l'utilisateur de l'appareil 101.

Grâce à un identifiant selon l'invention le serveur 102 peut aussi, dans une étape 315, émettre une requête entrante à destination de l'appareil 101. Cette requête entrante est alors reçue dans une étape 316 par la passerelle 112. Cette requête entrante est soumise à la vérification de l'identifiant 118. Cette vérification est identique aux vérifications décrites pour les étapes 310 et 312 et 313. C'est-à-dire, il faut que le fournisseur de contenu identifié par le champ 120 soit habilité à émettre une requête entrante et qu'en plus l'identifiant 118 soit valide. Si l'identifiant n'est pas valide, on passe à une étape 319 de fin dans laquelle aucune suite n'est donnée à la requête entrante émise par le serveur 102.

Si l'étape 316 révèle que la requête entrante émise à l'étape 315 est valide alors la passerelle 112 transcode l'identifiant 118 isolant vers un identifiant 117 et transmet la requête entrante transcodée au téléphone 101. Dans une étape 317 le téléphone 101 reçoit et traite cette requête entrante. Une telle requête entrante est, par exemple, une mise à jour d'une base de données dans l'appareil 101. Une telle base de données peut, par exemple, concerner des contacts que l'utilisateur de l'appareil 101 souhaite conserver, ou une liste de serveurs auxquels l'appareil 101 peut se connecter pour accéder à différents services.

L'algorithme de chiffrement utilisé pour chiffrer les champs 202 et 201 est de préférence l'algorithme DES (Data Encryption System, pour système de chiffrement de données), ou 3DES. Il peut s'agir de sa version de chiffrement par bloc, ou de sa version de chiffrement par chaînage de bloc. La version de chiffrement par chaînage de bloc permet d'assurer que toutes les parties chiffrées de l'identifiant 200 seront différentes grâce au champ 202 variable. Dans des variantes de l'invention on peut utiliser d'autres algorithmes de chiffrement comme par exemple AES (Advanced Encryption System, pour système de chiffrement avancé).

Un avantage de l'invention, et des identifiants isolants de contexte qu'elle définit, est que cela permet d'avoir, pour un utilisateur, un identifiant de contexte différent par fournisseur de contenu. Il est ainsi impossible à un fournisseur de contenu de recouper ses bases de données avec celles d'autres fournisseurs de contenu pour pouvoir mieux connaître la vie privée d'un utilisateur identifié par l'identifiant. Il est aussi impossible à un fournisseur de contenu de piller la base de données d'un fournisseur d'accès car le fournisseur de contenu n'a aucune certitude sur l'identité civile de l'utilisateur, ni sur le fait qu'un même utilisateur se connecte toujours avec le même identifiant isolant. On obtient donc ainsi une protection maximale de la vie privée de l'utilisateur.

On satisfait aussi aux exigences légales puisqu'il est possible, à partir d'un identifiant et uniquement pour l'opérateur ayant produit cet identifiant, de remonter jusqu'à l'utilisateur physique avec la coopération du fournisseur d'accès.

Un utilisateur peut choisir qu'il se connectera toujours en utilisant un identifiant de session. Ainsi, lors de deux connexions raisonnablement espacées dans le temps, l'utilisateur ayant fait ce choix se connectera à un même site en présentant deux identifiants isolants différents. Le fournisseur de contenu n'a alors aucun moyen de déterminer que c'est le même utilisateur qui s'est connecter deux fois.

Un utilisateur peut choisir d'avoir recours à un identifiant de contexte. Dans ce cas la passerelle 112 produira un identifiant isolant de contexte lors des connexions de l'utilisateur ayant fait ce choix. Le fournisseur de contenu pourra alors adapter ses réponses en fonctions des informations qu'il est capable de rattacher à l'identifiant isolant de contexte.

Le choix de l'utilisateur est géré, sur la passerelle 112, via une table associant un identifiant utilisateur, du type de l'identifiant 117, à un choix de l'utilisateur.

L'invention est totalement transposable si on considère un utilisateur qui utilise un ordinateur individuel pour se connecter à un fournisseur de contenu via un fournisseur d'accès à Internet (ou FAI). Dans ce cas le mode de connexion de l'ordinateur individuel à la passerelle est hertzien (GSM, UMTS...), câblé (réseau téléphonique commuté...), ou autre.

L'invention présente aussi l'avantage de dispenser l'entité gérant les identifiants isolants d'avoir à stocker ces identifiants isolants. En effet, comme ces identifiants sont calculés à partir de données facilement accessibles au moment du calcul, il n'est nul besoin de les stocker.

Enfin, un identifiant isolant selon l'invention est aussi bien transporté dans le champ NDS d'une norme de téléphonie que dans une trame d'un protocole quelconque utilisé sur le réseau Internet. Un identifiant isolant selon l'invention est donc universel et permet, entre autres, à un utilisateur de se connecter à différents types de serveurs d'un même fournisseur de contenu en utilisant le même identifiant isolant de contexte. Cela simplifie grandement la tache des fournisseurs de contenu qui peuvent unifier leur gestion de contexte indépendamment du type de serveur.

## Revendications

1. Procédé de production d'un premier identifiant (118, 200) de contexte isolant un utilisateur se connectant à un fournisseur de contenu via un réseau télématique et des moyens mis à sa disposition par un fournisseur (112) d'accès, l'utilisateur étant identifié par un deuxième (117) identifiant par le fournisseur d'accès, procédé **caractérisé en ce que** :
- les moyens du fournisseur d'accès comporte une passerelle (112) pour associer le premier identifiant isolant de contexte au deuxième identifiant,
- le premier identifiant isolant de contexte requérant pour sa production au moins un premier (201 ) champ pour assurer l'association entre le premier identifiant isolant de contexte et l'utilisateur,
- le premier identifiant isolant de contexte requiert pour sa production un deuxième champ (202) pour assurer la variabilité du premier identifiant en fonction du fournisseur de contenu,
- les premier et deuxième champs sont transcodés.

2. Procédé selon la revendication 1, **caractérisé en ce que** le premier champ comporte le deuxième identifiant.

3. Procédé selon l'une des revendications 1 ou 2, **caractérisé en ce que** le contenu du deuxième champ dépend d'un contrat existant entre l'utilisateur et le fournisseur d'accès (302-305).

4. Procédé selon l'une des revendications 1 à 3, **caractérisé en ce que** la durée de vie d'un identifiant isolant de contexte est gérée par le contenu du deuxième champ (202) qui change à une fréquence déterminée qui devient celle de la durée de vie de l'identifiant de contexte.

5. Procédé selon l'une des revendications 1 à 3, **caractérisé en ce que** la durée de vie d'un identifiant de contexte est gérée par la clé utilisée pour effectuer le transcodage qui change à une fréquence déterminée qui devient donc celle de la durée de vie de l'identifiant de contexte

6. Procédé selon l'une des revendications 1 à 5, **caractérisé en ce que** le premier identifiant comporte un troisième champ (204) pour contenir la nature de l'identifiant.

7. Procédé selon l'une des revendications 1 à 6, **caractérisé en ce que** le premier identifiant comporte un quatrième champ (203) pour identifier le fournisseur d'accès.

8. Procédé, selon l'une des revendications 6 ou 7, **caractérisé en ce que** le troisième et/ou le quatrième champ ne sont pas chiffrés.

9. Procédé selon l'une des revendications 1 à 8, **caractérisé en ce que** le premier champ comporte un identifiant (205) de contrat liant l'utilisateur au fournisseur d'accès.

10. Procédé selon l'une des revendications 1 à 9, **caractérisé en ce que** l'identifiant de contexte est universel et qu'un même identifiant de contexte permet à un utilisateur de se connecter à différents types de serveurs d'un même fournisseur de contenu.

11. Procédé selon l'une des revendications 1 à 10, **caractérisé en ce que** le contenu du deuxième champ est une donnée (303) pseudo-aléatoire.

12. Procédé selon la revendication 11, **caractérisé en ce que** la donnée pseudo-aléatoire est une date.

13. Procédé selon la revendication 11, **caractérisé en ce que** l'aléa est constant, pour la passerelle, pendant une période prédéterminée.

14. Procédé selon l'une des revendications 1 à 13, **caractérisé en ce que** le procédé de chiffrement, pour transcoder les premier et deuxième champ, est un procédé de chiffrement symétrique par bloc.

15. Procédé selon l'une des revendications 1 à 13, **caractérisé en ce que** le procédé de chiffrement, pour transcoder les premier et deuxième champ, est un procédé de chiffrement symétrique utilisant un chaînage de bloc.
